## Europäisches Patentamt
## European Patent Office
## Office européen des brevets

(11) Veröffentlichungsnummer: **0 036 957**
A2

(12) **EUROPÄISCHE PATENTANMELDUNG**

(21) Anmeldenummer: 81101488.5

(22) Anmeldetag: 02.03.81

(51) Int. Cl.³: **G 01 K 13/08**
**G 01 K 1/16**

(30) Priorität 10.03.80 DE 3009108

(43) Veröffentlichungstag der Anmeldung:
07.10.81 Patentblatt 81/40

(84) Benannte Vertragsstaaten:
AT BE CH DE FR GB IT LI NL SE

(71) Anmelder HOECHST AKTIENGESELLSCHAFT
Postfach 80 03 20
D-6230 Frankfurt/Main 80(DE)

(72) Erfinder Dinges, Reinhard, Dr.
Martin-Luther-Weg 3
D-6232 Bad Soden/Ts.(DE)

(54) Temperaturfühler.

(57) Die Erfindung betrifft einen Temperaturfühler 1 aus einem Materialkörper 2 und einem Vergußkörper 5. Der Materialkörper 2 besitzt eine Auflagefläche 10, die in ihrer Formgebung an die temperaturmäßig zu messende Oberfläche angepaßt ist. Im Materialkörper 2 ist eine Bohrung 9 vorhanden, in die eine Glasperle 7 mit einem darin eingeschlossenen Sensorelement 6 eingeschoben ist. Die Glasperle 7 ragt mit ihrem oberen Ende in den Vergußkörper 5 hinein. Von dem Sensorelement 6 führen Anschlußdrähte 11 und 12, die in dem Vergußkörper 5 eingebettet sind, nach außen. Parallel zu dem Sensorelement 6 sind Schaltelemente 8 geschaltet, die an die Anschlußdrähte 11 und 12 angeschlossen und in den Vergußkörper 5 eingebettet sind. Den thermischen Kontakt zwischen der Glasperle 7 und dem Materialkörper 2 stellt eine Wärmeleiterpaste 4 oder ein ähnliches Material her. Im Materialkörper 2 sind im Bereich der Berührungsfläche mit dem Vergußkörper 5 horizontale Bohrungen 13 vorgesehen, während die Bohrung 9 in der vertikalen Mittellinie des Temperaturfühlers 1 verläuft. In die Bohrungen 13 sind zur Verstärkung Metallhülsen 3 eingesetzt.

Fig. 1

H O E C H S T   A K T I E N G E S E L L S C H A F T
KALLE   Niederlassung der Hoechst AG

Hoe 80/K 005          - 1 -          23. Februar 1981
                                       WL-DI.Z.-is

0036957

Temperaturfühler

Die Erfindung betrifft einen Temperaturfühler mit einem Sensorelement im Inneren und einer Außenfläche, die in ihrer Formgebung an die temperaturmäßig zu messende Oberfläche angepaßt ist.

Auf verschiedenen technischen Gebieten ist es erforderlich, die Oberflächentemperatur von Walzen, Rollen, sonstigen gekrümmten Flächen oder von ebenen Flächen zu messen.

So sind Temperaturfühler in den Fixierstationen von elektrofotografischen Kopiergeräten bekannt, wie dies beispielsweise in der US-PS 3 888 622 beschrieben ist. Ein derartiger Temperaturfühler ist Bestandteil eines Temperaturmeßkreises zur Bestimmung und Regelung der Oberflächentemperatur einer Fixierrolle. Der Meßkreis umfaßt u.a. einen Sondenschuh, der zumindest ein Temperaturfühlelement enthält, wobei die Sonde in enger, berührungsfreier Stellung zu der bewegten Oberfläche der beheizten Fixierrolle angeordnet ist. Es wird innerhalb des Luftspaltes zwischen der beheizten Rollenoberfläche und dem Sondenschuh ein Induktionsfeld erzeugt und in den Spalt ein magnetisches Medium, bevorzugt in flüssiger Form, eingebracht, das einen relativ hohen Wärmeleitkoeffizient besitzt, wodurch ein schneller und wirksamer Wärmefluß von der zu messenden Oberfläche zu dem Temperaturfühlelement erhalten wird.

H O E C H S T   A K T I E N G E S E L L S C H A F T
KALLE  Niederlassung der Hoechst AG

- 2 -

Die Temperaturfühlelemente sind innerhalb des zylinderförmigen Sondenschuhs aus magnetisch nicht permeablem Material angeordnet. Der Sondenschuh ist an einem freien Ende eines Trägerarmes befestigt, der gleichfalls aus nicht permeablem Material, wie Aluminium, Kunststoff oder dgl. besteht. Der Trägerarm ist mit seinem anderen Ende mit dem Rahmen des Gerätes verbunden. Auf der Rückseite des Trägerarmes, die der Fixierrolle gegenüber liegt, ist ein Ausschnitt vorgesehen, der einen kreisförmigen Magneten aufnimmt, welcher in zwei Hälften längs einer vertikalen Mittellinie geteilt ist. Jede Hälfte des Magneten umfaßt eine Reihe von Nord- und Südpolstücken, wobei Polstücke mit entgegengesetzter Polarität zueinander benachbart sind.

Ein direkter Kontakt zwischen der zu messenden Oberfläche der Fixierrolle und dem Sondenschuh, der die Temperaturmeßfühler enthält, liegt nicht vor.

Die aus der DE-OS 2 420 161 bekannte Fixiervorrichtung für Toner enthält eine Temperaturmeßeinrichtung zum Messen der Oberflächentemperatur einer Walze und zum Steuern der Erwärmung dieser Walze. Diese Einrichtung besteht aus einer Fotowiderstandszelle mit Faseroptik, die nahe der Fixierwalze angeordnet ist und aus einer Lichtquelle, die einen Streifen aus Leuchtstoffmaterial auf dem Zylinderumfang der Fixierwalze beleuchtet. Das von dem beleuchteten Leuchtstoffstreifen emittierte Licht ist in seiner Intensität von der Temperatur des Leuchtstoffstreifens bzw. der Temperatur der Oberfläche

HOECHST AKTIENGESELLSCHAFT
KALLE  Niederlassung der Hoechst AG

- 3 -

der Fixierwalze indirekt proportional abhängig und wird über die Glasfaseroptik der Fotowiderstandszelle zugeleitet. Deren Ausgangssignal wird verstärkt einem Steuergerät zugeführt, das die Stromzufuhr zu einer Quarzlampe steuert, welche das Aufschmelzen des Toners auf einer Schmelzwalze der Fixiervorrichtung bewirkt.

Bei dieser Temperaturmeßeinrichtung findet gleichfalls kein Kontakt zwischen dem Temperaturmeßfühler und der zu messenden Oberfläche statt. Die Konstruktion ist wegen der Verwendung einer Fotowiderstandszelle mit Glasfaseroptik, einer Lichtquelle zur Beleuchtung des Leuchtstoffstreifens auf der Oberfläche der zu messenden Fixierwalze sowohl aufwendig als auch störanfällig, da die Verschmutzungsgefahr der Glasfaseroptik durch Toner groß ist, wodurch es zu einem Ausfall der Temperaturmeßvorrichtung kommt.

Aufgabe der Erfindung ist es, einen Temperaturmeßfühler zu schaffen, der ein schnelles, über längere Zeitspannen wartungsfreies Erfassen der Temperatur einer bewegten Oberfläche mit geringem technischem Aufwand und geringem Verschleiß ermöglicht.

Diese Aufgabe wird erfindungsgemäß von einem Temperaturfühler der eingangs beschriebenen Art dadurch gelöst, daß der Temperaturfühler aus einem Materialkörper mit selbstschmierenden Eigenschaften, mit einer Auflagefläche als Außenfläche und aus einem Vergußkörper besteht, daß das Material des Vergußkörpers eine hoch-

HOECHST AKTIENGESELLSCHAFT
KALLE Niederlassung der Hoechst AG

- 4 -

temperaturbeständige Vergußmasse ist, die nach dem Vergießen und Erstarren eine feste Verbindung mit dem Materialkörper ergibt, und daß der Materialkörper als Halterung des Sensorelements ausgebildet ist.

In Ausgestaltung der Erfindung ist das Sensorelement in einer Glasperle eingeschmolzen, die in eine Bohrung des Materialkörpers eingeschoben ist. Diese Bohrung enthält eine Wärmeleitpaste, die einen guten thermischen Kontakt zwischen dem Materialkörper und der Glasperle mit dem Sensorelement sicherstellt, wodurch eine schnelle Temperaturerfassung möglich ist, da die von der Auflagefläche des Materialkörpers erfaßte Temperatur nahezu ohne Verzögerung durch den Materialkörper hindurch, über die Wärmeleitpaste zu dem in der Glasperle eingeschmolzenen Sensorelement geleitet wird. Das Sensorelement ist zweckmäßigerweise mit Anschlußdrähten versehen, die in dem Vergußkörper eingebettet und mit ihren Enden aus diesem herausgeführt sind. Über die Anschlußdrähte wird das Sensorelement an eine elektrische Schaltung angeschlossen, die u.a. einen Verstärker enthält, der das Ausgangssignal des Sensorelements auf eine ensprechende Größe verstärkt.

In weiterer Ausgestaltung der Erfindung sind parallel zu dem Sensorelement Schaltelemente geschaltet, die an die Anschlußdrähte angeschlossen und in den Vergußkörper eingebettet sind. Der Materialkörper enthält in Ausbildung der Erfindung im Bereich der Berührungsfläche mit dem Vergußkörper Bohrungen mit zur

HOECHST AKTIENGESELLSCHAFT
KALLE Niederlassung der Hoechst AG

- 5 -

Verstärkung eingesetzten Metallhülsen. Dadurch ist es
möglich, die Enden eines Bügels aufzunehmen, der in
einem Halterohr, parallel verlaufend zu der zu messenden Oberfläche, gelagert ist. Diese Ausgestaltung ermöglicht es, den Temperaturfühler um den Bügel zu verschwenken, so daß die Auflagefläche des Temperaturfühlers in die richtige Lage zu der zu messenden Oberfläche gebracht werden kann. In bevorzugter Weise ist das
Sensorelement ein Widerstand mit negativem Temperaturkoeffizienten. Die Vergußmasse ist beispielweise ein
Silikongummi.

Die weitere Ausgestaltung der Erfindung ergibt sich aus
den Ansprüchen 10 bis 14.

Die Erfindung wird im folgenden anhand eines zeichnerisch dargestellten Ausführungsbeispiels näher
erläutert.

Es zeigen:

Fig. 1    eine Schnittansicht des Temperaturfühlers nach
          der Erfindung,

Fig. 2    eine Seitenansicht des Temperaturfühlers in
          Richtung des Pfeils A in Fig. 1,

Fig. 3    in schematischer Ansicht die Halterung des
          Temperaturfühlers durch einen Bügel und ein
          Halterohr, und

H O E C H S T   A K T I E N G E S E L L S C H A F T
KALLE  Niederlassung der Hoechst AG

– 6 .–

Fig. 4     schematisch die Anordnung und das Anliegen des
           Temperaturfühlers an der zu messenden Oberfläche.

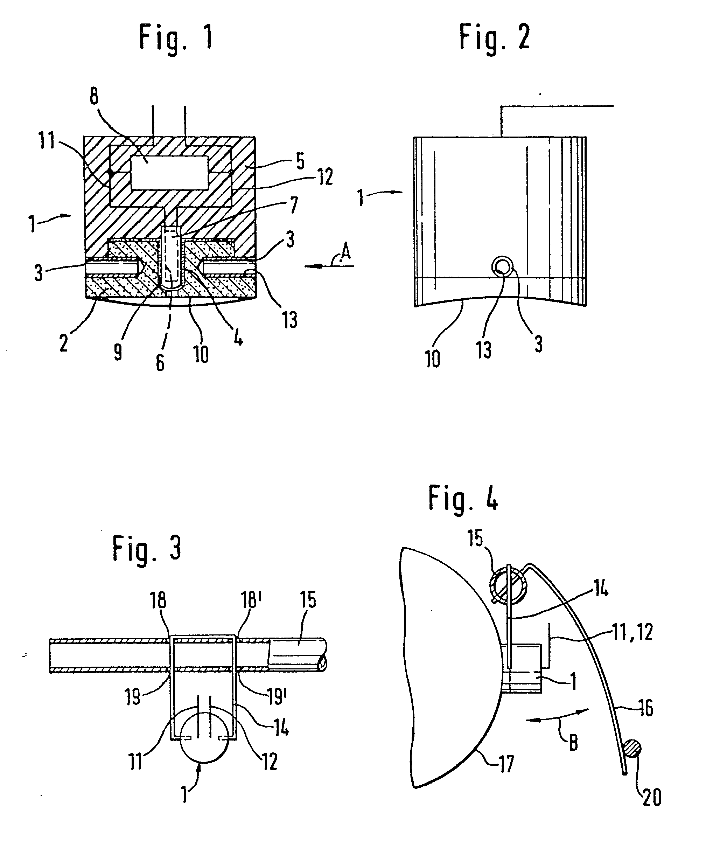

Der in Fig. 1 schematisch dargestellte Temperaturfühler 1 besteht aus einem Materialkörper 2 mit selbstschmierenden Eigenschaften und einem Vergußkörper 5. Als Material mit selbstschmierenden Eigenschaften für den Körper 2 wird Graphit bevorzugt, jedoch kann ebenso ein Sintermaterial mit feinverteilten Graphitpartikeln, eingelagertem Polytetrafluoräthylen oder eine Legierung aus Weichmetallen, wie beispielsweise Bronze verwendet werden. Der Materialkörper 2 weist eine Bohrung 9 auf, in die eine Glasperle 7 eingeschoben ist, die mit ihrem oberen Ende in den Vergußkörper 5 hineinragt. In die Glasperle 7 ist ein Sensorelement 6 eingeschmolzen, z.B. ein Widerstand mit negativem Temperaturkoeffizienten. Als Sensorelement kann jedes geeignete Sensorelement verwendet werden, das entweder eine Stromänderung oder eine Spannungsänderung als Folge einer Temperaturänderung, die mit dem Temperaturfühler abgetastet wird, erzeugt.

Der Materialkörper 2 weist als Außenfläche eine Auflagefläche 10 auf, die in ihrer Formgebung an die temperaturmäßig zu messende Oberfläche angepaßt ist, wie dies aus den Fig. 2 und 4 ersichtlich ist.

Der Materialkörper 2 dient als Halterung zur Aufnahme des Sensorelements 6 und die Bohrung 9 enthält eine Wärmeleitpaste 4, die einen guten thermischen Kontakt zwischen dem Materialkörper 2 und der Glasperle 7 mit dem darin eingeschlossenen Sensorelement 6 sicherstellt.

HOECHST AKTIENGESELLSCHAFT
KALLE Niederlassung der Hoechst AG

- 7 -

Anschlußdrähte 11 und 12 führen von dem Sensorelement 6 nach außen und sind in dem Vergußkörper 5 eingebettet. Die Enden der Anschlußdrähte 11 und 12 sind zweckmäßigerweise als Steckerdrähte ausgebildet, so daß in einfacher Weise eine Steckverbindung zwischen dem Temperaturfühler 1 und einer nicht gezeigten elektronischen Schaltung zur Weiterverarbeitung der elektrischen Ausgangsgrößen des Sensorelements 6 hergestellt werden kann.

Das Material des Vergußkörpers 5 ist eine hochtemperaturbeständige Vergußmasse, wie z.B. ein Silikongummi oder ein ähnliches Material, mit einer Wärmeleitfähigkeit kleiner als $0.5 \text{ W m}^{-1} \text{ K}^{-1}$.

Die Wärmeleitfähigkeit der Vergußmasse ist im Vergleich zu der Wärmeleitfähigkeit der für den Materialkörper 2 verwendeten Materialien gering, da diese Wärmeleitfähigkeit im Bereich von $4 - 250 \text{ W m}^{-1} \text{ K}^{-1}$ liegt.

Der Materialkörper 2 ermöglicht mit seiner großen Auflagefläche 10 bei kleiner Masse eine sehr gute thermische Ankopplung des Temperaturfühlers 1 an die zu messende bewegte Oberfläche 17. Deren Temperaturänderungen werden deshalb mit geringer Verzögerung registriert. Der Vergußkörper 5 bzw. die hierfür verwendete Vergußmasse trägt wegen ihrer geringen Wärmeleitfähigkeit nur wenig zur unerwünschten, schädlichen Gesamtwärmekapazität des Temperaturfühlers 1 bei und beeinflußt daher die Temperaturmessung nur in sehr geringem Umfang. Die

- 8 -

selbstschmierenden Eigenschaften, insbesondere die Gleiteigenschaften von Graphit, ersparen eine zusätzliche Gleitschicht des Materialkörpers 2, wie dies ansonsten bei der herkömmlichen Verwendung eines Metallkörpers als Halterung des Sensorelements 6 nötig wäre. Es wird dadurch auch der Nachteil vermieden, daß wegen der hohen zu messenden Temperaturen im Bereich von 180 °C bis 200 °C eine Gleitschicht eingesetzt werden muß, für die nur wenige Kunststoffbeschichtungen in Frage kommen. Solche Beschichtungen sind stark dem Verschleiß unterworfen, der schnell zu ihrer Zerstörung führt, da sie sehr dünn sein müssen, um den Wärmeübergang nicht zu stark zu behindern.

Wie aus Fig. 1 ersichtlich ist, sind horizontale Bohrungen 13 im Materialkörper 2 vorhanden, die zum Teil an der Grenzfläche zwischen dem Materialkörper 2 und dem Vergußkörper 5 liegen. In diese Bohrungen 13 sind bei einem Materialkörper 2 aus Graphit Metallhülsen 3 zur Verstärkung eingesetzt. Wie aus Fig. 3 zu ersehen ist, nehmen die Metallhülsen 3 die Enden eines Bügels 14 auf, der in einem Halterohr 15 gelagert ist. Das Halterohr 15 weist Bohrungen 18,18' sowie 19,19' auf, durch die die Schenkel des Bügels 14 hindurchgeführt sind. Das Halterohr 15 ist mit seinen Enden in einem nicht dargestellten Rahmen eines Gerätes befestigt, in welchem der Temperaturfühler eingebaut ist.

Wie Fig. 4 zeigt, verläuft das Halterohr 15 parallel zu der zu messenden Oberfläche 17, die eine Metall-,

HOECHST AKTIENGESELLSCHAFT
KALLE Niederlassung der Hoechst AG

- 9 -

Sinter-, oder eine mit einem Kunststoffüberzug beschichtete Oberfläche sein kann.

Das Halterohr 15 ist mit einer gewinkelten Feder 16
verbunden, die in Nähe ihres freien Endes gegen einen
Zapfen 20 anliegt. Die Feder 16 übt ein Drehmoment auf
das Halterohr 15 aus, wodurch sichergestellt ist, daß
der Bügel zusammen mit dem daran befestigten Temperaturfühler 1 an die zu messende Oberfläche 17 angedrückt wird. In einfacher Weise kann der Temperaturfühler 1 von der Oberfläche 17 abgehoben werden, indem
die Feder 16 von dem Zapfen 20 abgehoben wird, so daß
der Temperaturfühler um das Halterohr 15 verschwenkt
werden kann, wie dies durch den Doppelpfeil B in Fig. 4
angedeutet ist.

In den Vergußkörper 5 sind Schaltelemente 8 eingebettet, die parallel zu dem Sensorelement 6 geschaltet
sind und mit den Anschlußdrähten 11 und 12 in Verbindung stehen. Bei diesen Schaltelementen kann es sich
beispielsweise um einen oder mehrere Widerstände handeln, die sicherstellen, daß auch bei hohem Sensorwiderstand infolge zu niedriger Temperatur der zu
messenden Oberfläche die nicht dargestellte Schaltung,
welche die Signale des Temperaturfühlers verarbeitet,
in Betrieb bleibt, jedoch die Oberfläche nicht überheizt wird, da unabhängig von der gemessenen Oberflächentemperatur bei intakter Leitung zumindest ein
Stromfluß durch den oder die Widerstände erfolgt. Ohne
den oder die Widerstände könnte die Schaltung nicht

HOECHST AKTIENGESELLSCHAFT
KALLE Niederlassung der Hoechst AG

- 10 -

zwischen hohem Sensorwiderstand und einem eventuellen Leitungsbruch, d.h. einem Widerstand gleich unendlich, unterscheiden, so daß die Gefahr einer Überheizung der Oberfläche bei Leitungsbruch und eines dadurch ausgelösten Brandes bestünde.

Im Vergleich zu bekannten berührungslosen Temperaturmessungen mit Temperaturfühlern, die einen hohen technischen Aufwand erfordern, arbeitet der vorliegende Kontakt-Temperaturfühler verschleiß- und verzögerungsarm.

---

0036957

Patentansprüche

1. Temperaturfühler mit einem Sensorelement im Inneren und einer Außenfläche, die in ihrer Formgebung an die temperaturmäßig zu messende Oberfläche angepaßt ist, dadurch gekennzeichnet, daß der Temperaturfühler (1) aus einem Materialkörper (2) mit selbstschmierenden Eigenschaften, mit einer Auflagefläche (10) als Außenfläche und aus einem Vergußkörper (5) besteht, daß das Material des Vergußkörpers eine hochtemperaturbeständige Vergußmasse ist, die nach dem Vergießen und Erstarren eine feste Verbindung mit dem Materialkörper (2) ergibt, und daß der Materialkörper (2) als Halterung zur Aufnahme des Sensorelements (6) ausgebildet ist.

2. Temperaturfühler nach Anspruch 1, dadurch gekennzeichnet, daß der Materialkörper (2) aus Graphit ist und daß das Sensorelement (6) in einer Glasperle (7) eingeschmolzen ist, die in eine Bohrung (9) des Materialkörpers (2) eingeschoben ist.

3. Temperaturfühler nach den Ansprüchen 1 und 2, dadurch gekennzeichnet, daß die Bohrung (9) eine Wärmeleitpaste (4) enthält, die einen guten thermischen Kontakt zwischen dem Materialkörper (2) und der Glasperle (7) mit dem Sensorelement (6) sicherstellt.

4. Temperaturfühler nach den Ansprüchen 1 bis 3, dadurch gekennzeichnet, daß Anschlußdrähte (11,12) des

HOECHST AKTIENGESELLSCHAFT
KALLE Niederlassung der Hoechst AG

- 12 -

Sensorelements (6) in dem Vergußkörper (5) eingebettet
und mit ihren Enden aus diesem herausgeführt sind.

5. Temperaturfühler nach Anspruch 1, dadurch gekennzeichnet, daß parallel zu dem Sensorelement (6) Schaltelemente (8) geschaltet sind, die an die Anschlußdrähte
(11,12) angeschlossen und in den Vergußkörper (5) eingebettet sind.

6. Temperaturfühler nach den Ansprüchen 1 und 2, dadurch gekennzeichnet, daß der Materialkörper (2) im Bereich der Berührungsfläche mit dem Vergußkörper (5)
Bohrungen (13) mit zur Verstärkung eingesetzten Metallhülsen (3) enthält.

7. Temperaturfühler nach Anspruch 6, dadurch gekennzeichnet, daß die Metallhülsen (3) die Enden eines Bügels (14) aufnehmen, der in einem Halterohr (15),
parallel verlaufend zu der zu messenden Oberfläche
(17), gelagert ist.

8. Temperaturfühler nach Anspruch 1, dadurch gekennzeichnet, daß das Sensorelement (6) ein Widerstand mit
negativem Temperaturkoeffizienten ist.

9. Temperaturfühler nach Anspruch 1, dadurch gekennzeichnet, daß die Vergußmasse ein Silikongummi ist.

10. Temperaturfühler nach Anspruch 1, dadurch gekennzeichnet, daß der Materialkörper (2) ein Sintermaterial
mit fein verteilten Graphitpartikeln ist.

HOECHST AKTIENGESELLSCHAFT
KALLE Niederlassung der Hoechst AG

- 13 -

11. Temperaturfühler nach Anspruch 1, dadurch gekennzeichnet, daß der Materialkörper (2) aus einer Legierung von Weichmetallen besteht.

12. Temperaturfühler nach Anspruch 5, dadurch gekennzeichnet, daß die Enden der Anschlußdrähte (11,12) in
Gestalt von Steckerdrähten ausgebildet sind.

13. Temperaturfühler nach Anspruch 7, dadurch gekennzeichnet, daß eine Feder (16) mit dem Halterohr (15)
verbunden ist und ein Drehmoment auf dieses ausübt, um
die Auflagefläche (10) über den Bügel (14) gegen die zu
messende Oberfläche (17) anzudrücken.

14. Temperaturfühler nach Anspruch 1, dadurch gekennzeichnet, daß der Materialkörper aus einem metallischen
Werkstoff mit eingelagertem Polytetrafluoräthylen
besteht.

---

1/1

**Fig. 1**

**Fig. 2**

**Fig. 3**

**Fig. 4**